# EUROPEAN PATENT SPECIFICATION

(11) **EP 1 595 681 B1**
(45) Date of publication and mention of the grant of the patent: **13.04.2011**
(21) Application number: 04704729.5
(22) Date of filing: 23.01.2004
(51) Int. Cl.: B29C 45/83, F16H 25/24, F16H 57/04, F16H 25/22

(54) **MOLDING MACHINE WITH LUBRICATION MECHANISM AND METHOD FOR LUBRICATING MOLDING MACHINE**
FORMMASCHINE MIT SCHMIERMECHANISMUS UND VERFAHREN ZUR SCHMIERUNG DER FORMMASCHINE
MACHINE DE MOULAGE A SYSTEME DE LUBRIFICATION ET PROCEDE DE LUBRIFICATION DE LADITE MACHINE

(30) Priority: 27.01.2003 JP 2003017556
(43) Date of publication of application: 16.11.2005
(73) Proprietor: SUMITOMO HEAVY INDUSTRIES, LTD., Shinagawa-ku, Tokyo 141-8686 (JP)
(72) Inventor: HIRAGA, Noritsugu, Yotsukaido-shi, Chiba 284-0005 (JP)
(74) Representative: Wagner, Karl H.
(86) International application number: PCT/JP2004/000578
(87) International publication number: WO 2004/067258

(56) References cited:
- DE-A1- 19 519 770
- JP-A- 10 002 396
- JP-A- 2000 230 617
- JP-A- 2001 248 707
- JP-A- 2001 315 041
- JP-A- 2002 122 204
- JP-A- 2003 011 196

## Description

### TECHNICAL FIELD

The present invention relates to injection molding machines and, more particularly, to an electric injection molding machine having a lubrication mechanism and a lubricating method thereof.

### BACKGROUND ART

Generally, an injection molding machine, which performs resin molding, molds a resin component by filling a resin, which has been heated and melted in a heating cylinder, into a cavity of a mold, and cooling and solidifying the resin. Generally, a mold for resin-molding consists of a stationary mold and a movable mold, and opening and closing of the mold is performed by moving the movable mold relative to the stationary mold by a clamping apparatus.

Although various mechanisms can be used for driving the clamping apparatus, an apparatus, which moves the movable mold by attaching a toggle mechanism to the movable mold and driving the toggle mechanism by an electric motor, is used in many cases in recent years. Additionally, there is a system, which converts a rotational movement of an electric motor into a linear movement without using a toggle mechanism and uses the linear movement directly as a drive source. As for such an electric motor for moving a movable mold, there is used generally a servo motor. A ball screw is use as a mechanism for converting a rotational movement of a rotational shaft of the servo motor. Such a ball screw engages with the rotational shaft of the servo motor, and it is a mechanism in which a ball screw nut engages with the ball screw via a plurality of balls. In such a mechanism, when the rotational shaft of the serve motor rotates, the ball screw nut moves relatively in an axial direction of the rotational shaft. Additionally, if the ball screw nut is fixed, the rotational shaft moves relative to the ball screw nut in the axial direction. A moving distance, a moving speed and a moving direction of the ball screw nut or the rotational shaft are determined by an amount of rotation, a rotating speed and a rotating direction of the rotational shaft.

Here, in a case where the ball screw nut is fixed to a housing of the motor, the movable mold (a movable platen) can be driven via a toggle mechanism by connecting a drive part of the toggle mechanism to the rotational shaft of the motor. In this case, at portions where the screw part of the rotational axis and the screw part of the ball screw nut are in contact with the balls, a large load is applied in accordance with a drive force for driving the movable mold (that is, a drive force for driving the toggle mechanism). Accordingly, in order to elongate a service life of the ball screw by suppressing abrasion of the contacting portions of the balls, a lubrication material is supplied to the portions where the balls contact. That is, there are many cases in which a grease is used as a lubrication material in a ball screw drive mechanism used for a conventional injection molding machine (for example, refer to Japanese Laid-Open Patent Application No. 11-151741).

As mentioned above, it is general to use grease as a lubrication material to be supplied to a portion where the balls contact. However, since grease has a low fluidity and a high viscosity, the grease supplied to a part of the ball screw cannot maintain a lubrication film uniformly in its entirety, and a lubricating condition of the entire ball screw may become uneven.

Thus, a large amount of grease must be supplied so that the grease reaches sufficiently to each part of the ball screw. However, according to such a method, an amount of consumption of the grease, which is relatively expensive, is increased, which results in an increase in a maintenance cost of the injection molding machine. Additionally, if the amount of grease is increased, excessive grease scatters in and around the molding machine, which creates an extremely bad environment due to pollution of in surrounding area of the molding machine.

Moreover, since the ball screw operates frequently during an operation of the molding machine and a large load is applied to the contact portions of the balls, a frictional heat is generated at the contact portions of the balls. Thereby, the ball screw becomes a high temperature, which is a factor of reducing the service life of the ball screw. Thus, if a lubrication material supplied to the ball screw has an effect of promoting release of heat or an effect of cooling, the service life of the ball screw can be elongated further. However, the above-mentioned grease provides only a lubricating action by staying at the heat-generating portion, and a heat-releasing effect or a cooling effect cannot be expected.

Prior art document JP 2002-122204 A shows and describes a feed mechanism for a machine according to the preamble of claim 1, comprising a ball screw/nut mechanism which comprises a lubricant jet port formed in an opposite face between a nut and a screw shaft, this lubricant jet port is periodically closed and opened, in order to jet out the lubricant in control time durations, in order to reduce the required amount of the lubricant. This document shows also a lubrification method according to the preamble of claim 7.

From document JP 2000-230617 A a nut member cooling method and a cooling device for carrying out this method is known, in which air is blown via an air injection port in order to cool a nut member. By mixing oil mist to the air the nut member is both cooled and simultaneously the balls and the ball bearings are lubricated. By mixing oil mist to the air the amount of lubrication can be reduced.

Document JP 10002396 A disclose a washing device for ball screw, in order to remove dust adhered to the male screw of a ball screw. Lubrication oil is injected via a nozzle and a cavity towards the male screw, in order to wash out dust adhered to the male screw. The lubrication oil is, thereafter, discharged from a discharge oil passage.

From document JP 2001-248707 A a grease supply device for driving parts is known for providing lubrication to a ball screw shaft and a ball nut, respectively. A lubricant guide passage is provided for supplying the lubricant from a lubricant supply passage between the ball nut and the ball screw shaft. An annular oil channel is formed in at least one of the sliding portions of the rotary part and the grease supply member. The lubricant is supplied via the lubricant guide passage.

### DISCLOSURE OF INVENTION

It is a general object of the present invention to provide an improved and useful molding machine having a lubrication mechanism.

A more specific object of the present invention is to provide a lubrication mechanism of an electric injection molding machine that can elongate a service life of a ball screw by effectively lubricating the ball screw by directly spraying a screw part of the ball screw with a lubrication material and by a cooling effect of a gas used for the spray.

These and other objects are solved by a molding machine having a lubrication mechanism as stated in claim 1.

Preferred embodiments of this invention are set forth in the subclaims.

According to one aspect of the present invention there is provided a molding machine according to claim 1.

According to the above-mentioned invention, the lubrication material of a liquid state is directly sprayed in the vicinity of a part, which needs lubrication, since the lubrication material is atomized and sprayed over the component part of the conversion mechanism. Accordingly, sufficient lubrication is achieved even if the lubrication material is in a liquid state. Additionally, heat generated by the conversion mechanism is caused to be absorbed by the lubricant material in a liquid state so as to suppress a temperature rise of the conversion mechanism.

In the above-mentioned invention, the lubrification mechanism comprises recovery means for recovering the lubrication material sprayed from the spray nozzle, wherein the spray nozzle is a nozzle that atomizes the lubrication material of a liquid state by an injection of a gas. Since the atomized lubrication material changes into a liquid state by being brought into contact with the component part, the lubricant material in the liquid state can be recovered and reused. Further, since the liquid state lubrication material, which has absorbed heat of the component part of the conversion mechanism, is recovered, the temperature rise of the conversion mechanism can be suppressed.

Additionally, it is preferable that the gas supplied to the spray nozzle is a compressed air, and the component part of said conversion mechanism is cooled due to adiabatic expansion when the compressed air is injected from the spray nozzle.

In the above-mentioned invention, the recovery means comprises a cover member surrounding the component part of the conversion mechanism, a recovery pipe, which leads the liquid state lubrication material collected in the cover member or the component part of said conversion mechanism, to a recovery container, and a pump for supplying the lubrication material collected in the recovery container to the spray nozzle. It is preferable to have cooling means for cooling the recovered lubrication material.

Additionally, in one embodiment of the present invention, said conversion mechanism is a ball screw mechanism that comprises a ball screw shaft and a ball screw nut, and said spray nozzle is attached to said ball screw nut so as to directly spray the lubrication material inside said ball screw nut. Said spray nozzle may be communicated with an aperture opening in an inner surface of a groove in which balls inside said ball screw nut roll, the aperture opening at a position where no load is applied by the balls. Alternately, said spray nozzle may be communicated with an aperture opening between grooves in which balls inside said ball screw nut roll.

Additionally, the conversion mechanism may be a ball screw mechanism comprising a ball screw shaft and a ball screw nut, and the spray nozzle may be located in the vicinity of the ball screw shaft so as to directly spray the lubrication material onto the ball screw shaft.

A molding machine having the lubrication mechanism according to the present invention may further comprise a temperature detector that detects a temperature of the ball screw nut. Additionally, it may further comprise an iron powder amount detector that measures an amount of iron powder contained in the recovered lubrication material.

Additionally, the molding machine having the lubrication mechanism according to the present invention may be an electric injection molding machine.

With the molding machine of the present invention a lubrication method can be carried out which comprises spraying an atomized lubrication material to a component part of a conversion mechanism that converts a rotational movement of a rotational shaft of a motor, which is a drive source of a clamping apparatus, into a linear movement in an axial direction according to claim 7. Additionally, the gas may be a compressed air, and the component part of the conversion mechanism may be cooled due to adiabatic expansion when the compressed air is injected.

Other objects, features and advantages of the present invention will become more apparent from the following detailed description when read in conjunction with the accompanying drawings.

### BRIEF DESCRIPTION OF DRAWINGS

FIG. 1 is an outline structure diagram showing an example of a clamping apparatus into which a lubrication mechanism according to the present invention is incorporated.
FIG. 2 is a cross-sectional view of a ball screw mechanism incorporated into a motor.
FIG. 3 is a structure diagram showing an entire drive apparatus in which a lubrication mechanism according to the first embodiment is provided.
FIG. 4 is a cross-sectional view showing an example of spraying balls inside a ball screw nut with lubrication oil.
FIG. 5 is a cross-sectional view showing an example of spraying a ball screw shaft inside the ball screw nut with lubrication oil.
FIG. 6 is a structure diagram showing an entire drive apparatus in which a lubrication mechanism according to a second embodiment of the present invention is provided.
FIG. 7 is a cross-sectional view of an injection apparatus of a built-in motor type, which is an example of an injection apparatus.

### BEST MODE FOR CARRYING OUT THE INVENTION

A description will be given, with reference to the drawings, of a mode for carrying out the present invention.

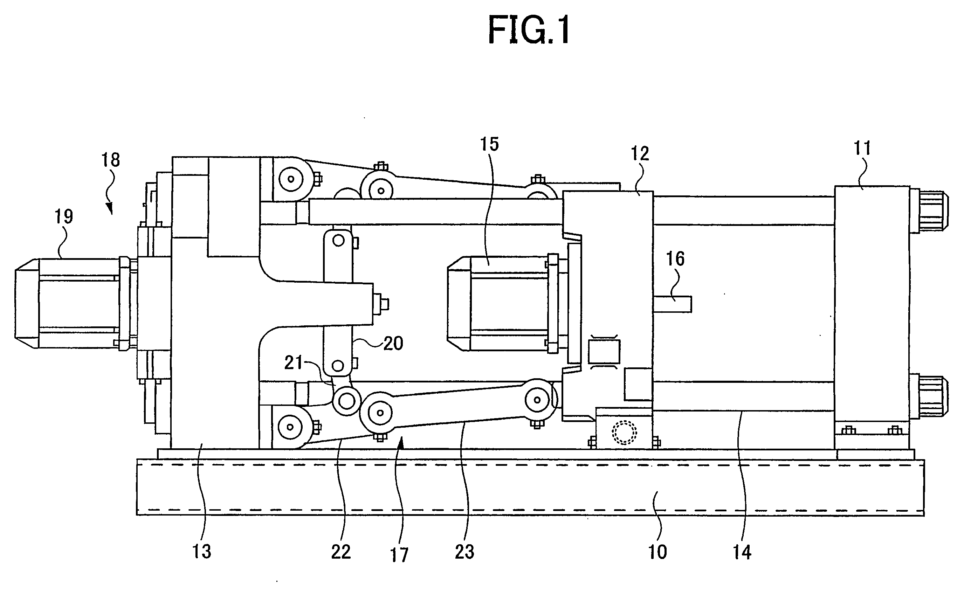

First, a description will be given of an example of a clamping apparatus of an injection molding machine into which a lubrication mechanism according to the present invention is incorporated. FIG. 1 is an outline structure diagram of the example of the clamping apparatus in which the lubrication mechanism according to the present invention is incorporated.

The clamping apparatus shown in FIG. 1 comprises a stationary platen 11 fixed to a frame 10 and a movable platen 12 movable relative to the stationary platen. A toggle support 13 as a base support is movably provided relative to the frame 10 with a predetermined distance to the stationary platen 11. Tie bars 14 are provided between the fixed platen 11 and the toggle support 13. The movable platen 12 is arranged in a state where it faces the stationary platen 11, and is movable along the tie bars 14.

A stationary mold (not shown in the figure) is attached to a surface of the stationary platen 11 facing the movable platen 12, and a movable mold (not shown in the figure) is attached to a surface of the movable platen facing the stationary platen 11.

A drive apparatus for an ejector is attached to a rear side of the movable platen 12. The drive apparatus for the ejector has a motor 15 as a drive source so as to move an ejector rod 16 forward or rearward. By driving the ejector rod 16, ejector pins (not shown in the figure) are driven so as to push a molded component out of the cavity of the movable mold.

A toggle mechanism 17 is provided between the movable platen 12 and the toggle support 13. Additionally, a drive apparatus 18 as drive means for clamping is provided on a rear end (a left end in FIG. 1) of the toggle support 13. The drive apparatus 18 comprises a motor 19 so as to cause the toggle mechanism to operate by moving a cross head 20 as a member to be driven forward or rearward.

According to the operation of the toggle mechanism 17, the movable platen 12 is moved toward the stationary platen 11 so as to perform mold closing, and a clamping force, which is a thrust force by the motor 19 multiplied by a torque magnifying power, is exerted on the movable platen 12. Thereby, the movable mold attached to the movable platen 12 is pressed against the stationary mold attached to the stationary platen 11 so as to perform mold clamping. It should be noted that although the clamping apparatus shown in FIG. 1 moves the movable platen 12 via the toggle mechanism 17 so as to generate a clamping force, a thrust force generated by the motor 19 may be applied directly to the movable platen 12 without using the toggle mechanism 17. The motor 19 is preferably an electric servo motor that can control a rotational speed or a rotational direction.

The above-mentioned toggle mechanism 17 comprises a toggle lever 21 movably supported with respect to the cross head, a toggle lever 22 swingably supported with respect to the toggle support 13, and a toggle arm 23 swingably supported with respect to the movable platen 12. Between the toggle lever 21 and the toggle lever 22 and between the toggle lever 22 and the toggle arm 23 are connected by link connections.

The above-mentioned clamping apparatus uses the motor 19 as a drive source of the link mechanism 17, which drives the movable platen 12, and, a ball screw mechanism is incorporated into the motor 19. That is, it is constituted so that one of the ball screw shaft and the ball screw nut of the ball screw mechanism moves in an axial direction when the rotational shaft of the motor 19 rotates, and the toggle mechanism will is also operated in connection with it.

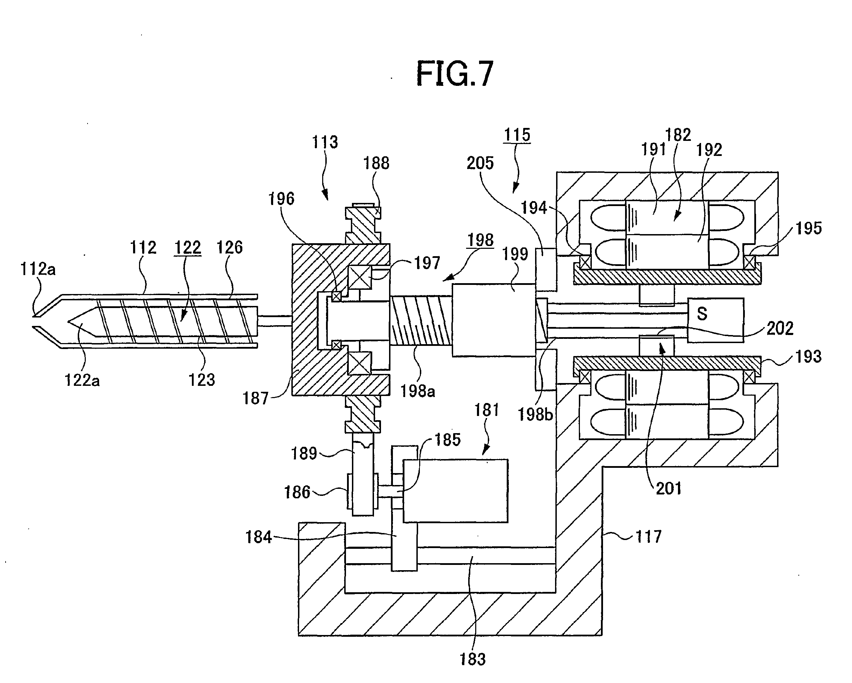

Next, a description will be given, with reference to FIG. 7, of an injection apparatus arranged opposite to the clamping apparatus. FIG. 7 is a cross-sectional view of an injection apparatus 100 of a built-in motor as an example of an injection apparatus.

In the injection apparatus 100 shown in FIG. 7, an injector nozzle 112a is provided at a front end of a heating cylinder 112 as a cylinder member. A screw 122 is provided inside the heating cylinder 112 so as to be movable forward and rearward (left and right directions in FIG. 7) and rotatable. The screw 122 has a screw head 122a on a front end thereof, and extends rearward inside the heating cylinder 112, and is fixed to a bearing box 113 at a rear end. Additionally, a spiral flight 123 is formed around the screw 122, and a groove 126 is formed between the grooves 126.

Then, a hopper (not shown in the figure) is connected to a resin supply port formed in a predetermined portion of the heating cylinder 112. The resin supply port is formed in the portion at a rear end portion of the groove 126 in a state where the screw 122 is at the forefront position (left side in FIG. 7) in the heating cylinder 112.

Therefore, if the screw 122 is moved rearward by a predetermined distance while rotating during a metering process, pellet-like resin is supplied to the heating cylinder 122 from inside the hopper and the resin is moved in a direction toward the screw head 122a in the groove 126.

Moreover, a heater (not shown in the figure) is provided as heating means around the heating cylinder 122 so that the resin in the groove 126 is melted by heating the heating cylinder 112 by the heater and rotating the screw 122. Accordingly, if the screw is moved rearward by a predetermined distance while rotating, a melted resin corresponding to one shot can be stored in front of the screw head 122a.

Next, if the screw 122 is moved forward without rotation during an injection process, the resin stored in front of the screw head 122a is injected from the injection nozzle 112a, and is filled into the cavity of the mold apparatus.

Behind the heating cylinder 112, a drive part 115 for reciprocating and rotating the screw 122 is provided. The drive part 115 is equipped with a frame 117, a metering motor 181 movably provided to the frame 117 and an injection motor fixed to the frame 117. A motor 182 for injection and the screw 122 are arranged on the same axis.

A guidance bar 183, which extends in parallel with the screw 122, is provided on the frame 117, and the metering motor 181 is moved along the guidance bar 183. Thus, a support board 184 is slidably provided with respect to the guidance bar 183, and the metering motor 181 is attached to the support board 184.

Additionally, a drive-side pulley 186 is fixed to an output shaft 185 of the metering motor 181, and an driven-side pulley 188 is fixed to an outer circumference of a box body 187 of the bearing box 133. A timing belt 189 is provided over the drive-side pulley 186 and the driven-side pulley 188. It should be noted that transmission means connecting the bearing box 113 with the metering motor 181 is constituted by the by the drive-side pulley 186, the driven-side pulley 186 and the timing belt 189.

On the other hand, the motor 182 for injection comprises a stator fixed to the frame 117 and a rotor 192 provided an inner circumference side of the stator 191, and the rotor 192 is rotatably supported with respect to the frame 117. Accordingly, a hollow rotor shaft 193 is fitted and fixed to the rotor 192, and both ends of the rotor shaft 193 are supported on the frame by bearings 194 and 195.

Additionally, bearings 196 and 197 are provided in the bearing box 113, and the screw 122 and a ball screw shaft/spline shaft unit 198 are coupled in a relatively rotatable manner by the bearings 196 and 197. A ball nut 199 fixed to the frame 117 via a load meter 205 as load detecting means is engaged with a ball screw shaft part 198a as a movement direction conversion part formed on a front part of the ball screw shaft/spline shaft unit 198.

It should be noted that drive transmission means for restricting a relative movement in an axial direction and permitting a relative movement in a rotating direction is constituted between the screw 122 and the ball screw shaft/spline shaft unit 198 by the bearing box 113. Additionally, means for converting a rotational movement into a linear movement is constituted by the ball nut 199 and the ball screw shaft part 198a.

Accordingly, when the metering motor 181 is driven in the metering process, the rotation of the metering pump is transmitted sequentially to the drive-side pulley 186, the timing belt 189, the box body 187 and the screw 122, and the screw 122 is rotated. In this case, since the screw 122 and the ball screw shaft/spline shaft unit 198 are coupled relatively rotatably via the bearing box 113, the rotation transmitted to the box body 187 is not transmitted to the ball screw shaft/spline shaft unit 198. On the other hand, a pressure of the resin in the heating cylinder 112 is transmitted to the ball screw shaft/spline shaft unit 198 via the bearing box 113. Accordingly, the ball screw shaft/spline shaft unit 198 moves rearward while rotating, and, in connection with this, the screw is caused to rotate and move rearward. It should be noted that a back pressure is applied to the screw 122 against the pressure of the resin when the screw 122 is moved rearward.

On the other hand, the screw 122 can be gradually advanced without rotating the screw 122 by supplying an electric current of a predetermined frequency to the stator 191 in the motor 182 for injection. In order for that, an annular engaging member 201 is fixed to a substantially middle of an inner side of the rotor shaft 193. Additionally, a spline 202 formed on an inner circumference of an engagement member 201 is brought into engagement with a spline shaft part 198a as a rotation transmission part formed on an outer circumference of a rear part of the ball screw shaft/spline shaft unit 198. It should be noted that rotation transmission means by which a rotation of the motor 82 for injection motor 82 is transmitted is constituted by the spline 102 and the spline shaft part 198b.

Accordingly, when the motor 182 for injection is driven in the injection process, the rotation of the motor 182 for injection is transmitted sequentially to the rotor shaft 193, the engagement member 201 and the screw shaft/spline shaft unit 198. Thus, since the ball nut 199 is fixed to the frame 117, the screw shaft/spline shaft unit 198 is rotated and also moved forward, which moves the screw 122 forward without rotation. Additionally, at this time, the injection pressure applied to the screw shaft/spline shaft unit 198 is transmitted to the load meter 205 via the ball nut 199, and is detected by the load meter 205. It should be noted that the screw shaft/spline shaft unit 198 is moved forward or rearward in the axial direction by a stroke S.

Although the metering motor 181 and the screw shaft/spline shaft unit 198 are arranged on different axes in the above-mentioned example, the motor for injection, the ball screw shaft/spline unit and the screw may be arranged on different axes from each other.

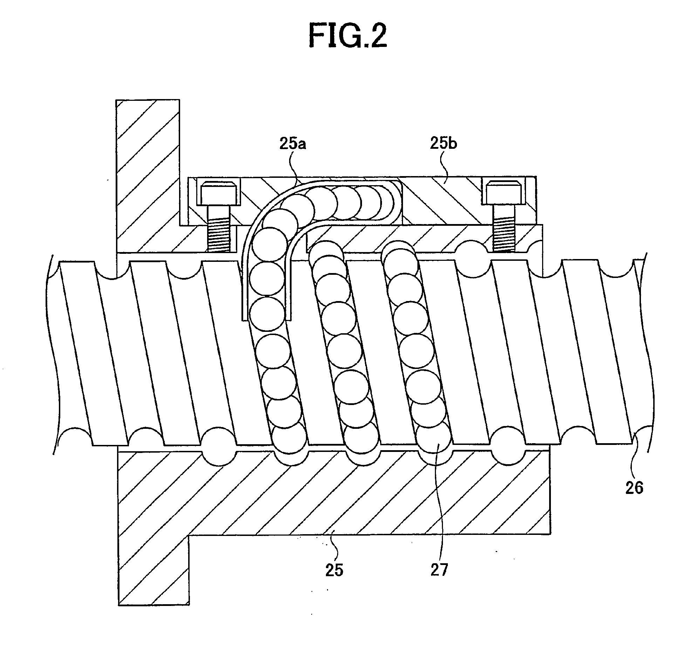

Next, a description will be given, with reference to FIG. 2, of the ball screw mechanism into which the lubrication mechanism according to the present invention is incorporated.

The FIG. 2 is a cross-sectional view of the ball screw mechanism incorporated in the motor 19 shown in FIG. 1. The ball screw mechanism shown in FIG. 2 comprises a ball screw nut 25 and a ball screw shaft 26. The ball screw nut 25 and the ball screw shaft 26 are provided with spiral grooves having the same pitch, and a plurality of balls 27 as power transfer members are arranged between the groove of the ball screw nut 25 and the groove of the ball screw shaft 26. Additionally, a return tube 25a is attached to the ball screw nut 25 by a return tube attachment member 25b. Thereby, the balls 27 circulates while rolling between the spiral groove of the ball screw shaft 26 and the spiral groove of the ball screw nut 25 and inside the return tube 25a.

As mentioned above, since a power is transmitted between the ball screw shaft 26 and the ball screw nut 25 while the plurality of balls 27 roll, there is almost no slide friction between the ball screw shaft 26 and the ball screw nut 25, thereby transmitting a power smoothly. Accordingly, when the ball screw nut 25 is fixed, the rotational movement of the ball screw shaft 26 is efficiently changed into the linear movement in the axial direction of the ball screw shaft 26.

Although the power transmission members of the above-mentioned ball screw mechanism are the plurality of balls, a plurality of rollers having about the same size as the balls may be used as the power transmission members. Additionally, a planetary roller may be used as the power transmission members. It should be noted that the rotational/linear movement converting mechanism using a plurality of rollers or the rotational/linear movement converting mechanism using a planetary roller is well-known, and a detailed description thereof will be omitted.

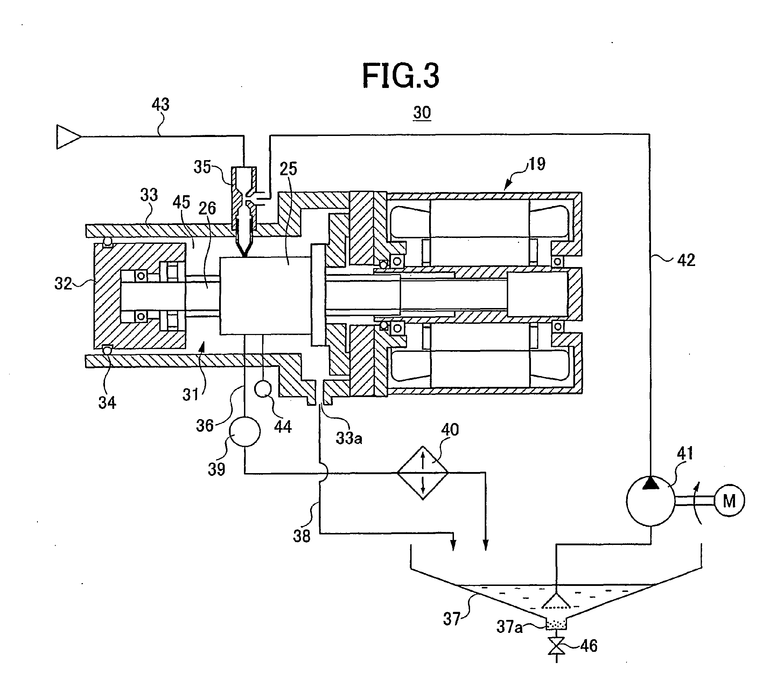

Next, a description will be given of the lubrication mechanism according to a first embodiment of the present invention. FIG. 3 is a structure diagram showing an entire drive apparatus provided with the lubrication mechanism according to the first embodiment of the present invention.

The drive apparatus 30 shown in FIG. 3 is a part corresponding to the drive apparatus 18 shown in FIG. 1, and serves as a drive source for driving the toggle mechanism of the clamping apparatus. It should be noted that the drive apparatus 30 in FIG. 3 is shown in an orientation of which left and right are reversed with respect to the drive apparatus shown in FIG. 1, and in the same orientation as the drive part 115 of the injection apparatus shown in FIG. 7.

The drive apparatus 30 comprises a motor 19 as a power source and a ball screw mechanism 31 driven by the motor 19. The motor 19 is an electric servo motor of which rotating direction and rotating speed are controllable. The ball screw mechanism 31 has the ball screw nut 25 and the ball screw shaft 26 as shown in the FIG. 2. The ball screw nut 25 is fixed to a housing of the motor 19. The ball screw shaft 26 is movable in a direction of the rotational axis while rotating integrally with the rotational shaft (rotor) of the motor 19.

A moving member 32 is attached to an end of the ball screw shaft 26 via a baring. The moving member 32 is connected to the cross head 20 of the toggle mechanism 17 so that the toggle mechanism 17 operates with a reciprocating movement of the moving member. Additionally, when the drive apparatus 30 is provided to the injection apparatus, the moving member 32 corresponds to the box body 187 of the bearing box 113.

In the present embodiment, a generally cylindrical cover member 33 is provided so as to cover the ball screw mechanism 31 and the moving member 32. The moving member 32 is constituted to be movable in the cover member 33, and a seal member 34 is provided between the moving members 32 and the cover member 33 so as to form a sealed space 45.

A spray nozzle 35 for spraying lubrication oil, which is the lubrication material for lubricating the ball screw mechanism 31, is attached to the cover member 33. In the present embodiment, an end portion of the spray nozzle 35 extends to inside the ball screw nut 25 so as to directly spray the atomized lubrication oil inside the ball screw nut 25 as mentioned later.

The lubrication oil and compressed air are supplied to the spray nozzle 35 so as to atomize the lubrication oil into appropriate particles by powerfully injecting the compressed air from a nozzle tip. The atomized lubrication oil adhere onto the ball groove of the ball screw shaft 26 and the ball groove of the ball screw nut 25 an surfaces of the balls 27, which are component parts of the ball screw mechanism so as to form lubrication oil films at contact portions between each of the ball groove of the ball screw shaft 26 and the ball groove of the ball screw nut 25 and each of the balls 27.

Under this circumstance, the compressed air injected inside the ball screw nut 25 adiabatically expands, thereby absorbs heat in surrounding area. That is, the balls 27, the ball screw nut 25 and the ball screw shaft 26 of which temperatures are raised due to friction heat generated by a movement of the balls inside the ball screw nut 25 are cooled by the adiabatically expanded injection air.

Additionally, the lubrication oil turned into a liquid state by adhering onto the balls 27, the ball screw nut 25 and the ball screw shaft 26 is discharged from the inside of the ball screw nut 25. Under this circumstance, the lubrication oil also absorbs heat from the surrounding area and discharged from the inside of the ball screw nut 25, there also is a cooling effect by the lubricant oil itself.

It should be noted that although the lubrication oil is atomized using the compressed air in the present embodiment, the gaseous matter (gas) for atomization is not limited to the compressed air. For example, an inert gas such as nitrogen (N₂) or a nontoxic compressible gas such as carbon dioxide (CO₂) may be used as the gas for atomization.

An aperture (opening) for recovering the lubrication oil is provided in a lower-side portion of the ball screw nut 25 and a lubrication oil recovery pipe 36 is connected thereto. The lubrication oil recovery pipe 36 extends through the cover member 33, and is connected to the lubrication oil recovery tank 37. Accordingly, the lubrication oil turned into a liquid state in the ball screw nut 25 flows into the lubrication oil recovery pipe 35, and is guided to the lubrication oil recovery tank 37. An iron amount detector 39 and a cooler 40 are provided in the middle of the lubrication oil recovery pipe 36.

The iron amount detector 39 detects an amount of iron component contained in the lubrication oil. The iron component contained in the lubrication oil is caused by abrasion of component parts of the ball screw mechanism 31, and, thus, an amount of abrasion of the ball screw mechanism 31 can be estimated by detecting the amount of iron component. Accordingly, an operator or a maintenance can estimate a service life of the ball screw mechanism by causing the detection result of the iron amount detector 39 to be displayed on a display unit. Additionally, the detection result of the iron amount detector 39 may be supplies to a controller to calculate a service life and display or an operator is notified of a fact that a service life of the ball screw mechanism is ended when an amount of iron component exceeds a predetermined value.

The cooler 40 is for cooling the recovered lubrication oil. As mentioned above, the lubrication oil collected from the ball screw nut 25 has a high temperature due to absorption of heat from the ball screw nut 25 and the ball screw shaft 26, and it is for reuse by cooling it.

It should be noted that a part of the lubrication oil in the ball screw nut leaks out from an end of the ball screw nut 25, and stored in the cover member 33. An aperture (opening) 33a for discharging the lubrication oil is provided in a lower portion of the cover member 33, and a lubrication oil recovery pipe 38 is connected thereto. The lubrication oil recovery pipe 38 is connected to the lubrication oil recovery tank 37, and, thus, the lubrication oil stored in the bottom portion of the cover member 33 flows through the lubrication oil recovery pipe 38 and is guided to the lubrication oil recovery tank 37.

The lubrication oil recovery tank 37 is provided with a recessed portion 37a on the bottom of the center so as to be configured so that impure ingredient such as metal powder (iron powder) or the like contained in the flowing lubricant oil is stored therein. The impure ingredient stored in the recessed portion 37a is discharged by opening a drain valve periodically or when accumulated in some amount.

The lubrication oil recovered and stored in the lubrication oil recovery tank 37 is suctioned by a lubrication oil pump 41, and is supplied to the spray nozzle 35 through a lubrication oil supply pipe 42. The lubrication oil supplied to the spray nozzle 35 is atomized by injection of the compressed air supplied through a compressed air supply pipe 43, and sprayed inside the ball screw nut 25 again.

Thus, in the present invention, since the lubrication oil is circulated and is reused, the cost spent on lubrication can be reduced. Moreover, a service life can be estimated by detection of iron using the recovered lubrication oil as mentioned above, and the recovered lubrication oil can be reused by cooling it. Additionally, since the cover 33 forms the sealed space 45, heat generated by the ball screw does not leak to a surrounding area of the drive apparatus, and, therefore, a temperature of the surrounding area of the drive apparatus can be prevented from rising.

It should be noted that the cooling effect can be checked by detecting a temperature of the ball screw nut 25 by providing a temperature sensor 44 to the ball screw nut 25, and the ball screw mechanism 31 can be efficiently cooled by adjusting an amount of supply and a temperature of the lubrication oil.

Moreover, although the iron amount detector 39 and the cooler 40 are provided in the middle of the lubrication oil recovery pipe 36 in the example shown in FIG. 3, they may be provided to the lubrication oil recovery tank 37 or in the middle of the lubrication oil supply pipe 42.

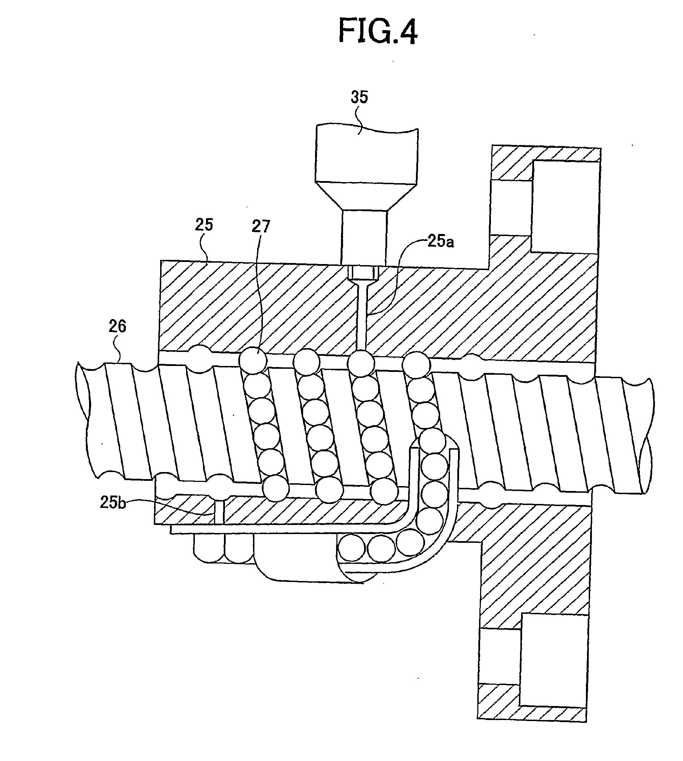

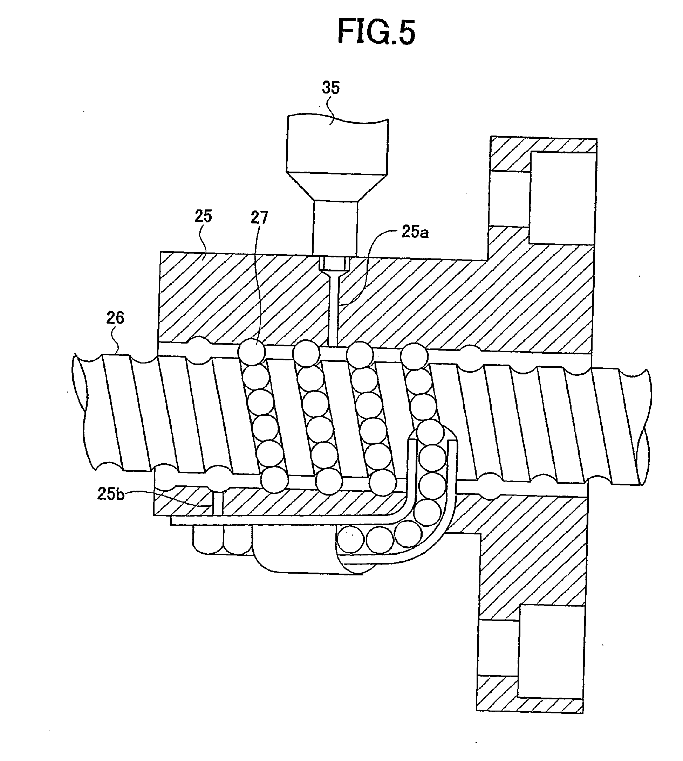

Next, a description will be given of a position of spraying the lubrication oil in the ball screw nut 25. FIG. 4 is a cross-sectional view showing an example of spraying the lubrication oil onto the balls 27 in the ball screw nut 25, and FIG. 5 is a cross-sectional view showing an example of spraying the lubrication oil onto the ball screw shaft 26 in the ball screw nut 25. In the present embodiment, the lubrication oil is sprayed at a position as close as possible to a portion that requires lubrication so as to achieve efficient lubrication.

In the example shown in FIG. 4, the lubrication oil supply aperture 25a is provided to the ball screw nut 25, and the tip part of the spray nozzle 35 is attached thereto. The lubrication oil supply aperture 25a is opens at almost center of the ball screw groove formed in the ball screw groove so that the lubrication oil atomized by the spray nozzle 35 is directly sprayed onto the balls 27.

Moreover, since the ball screw incorporated into the injection molding machine receives a load mainly only in one direction, the load is applied to only one side of the ball screw groove. Thus, the opening may be provided at a position of the ball screw groove offset in a direction where no load is received.

When the ball screw shaft 26 moves in the ball screw mechanism 31, the balls 27 are brought into contact with a side surface portion in the inner surface of the ball screw groove of the ball screw nut 25. That is, a load is hardly applied to a center portion of the ball screw groove. In the example shown in FIG. 4, the opening of the lubrication oil supply aperture 25a is provided in the portion where no load is applied, and, thereby, the lubrication oil is directly sprayed onto the balls 27 while acquiring the portion of the ball screw groove in contact with the balls.

It should be noted that a lubrication oil recovery aperture 25b is provided to a lower portion of the opposite side of the lubrication oil supply aperture 25a, and the lubrication oil recovery pipe 36 is connected thereto. The atomized lubrication oil sprayed from the spray nozzle 35 hits the balls 27 by passing through the lubrication oil supply aperture 25a and adheres onto the surfaces of the balls 27 so as to form lubrication oil films. The lubrication oil lubricating the balls 27 is stored in a lower part of the inside of the ball screw nut 25, and is discharged outside the ball screw nut 25 through the lubrication oil recovery aperture 25b and the lubrication oil recovery pipe 36.

In the example shown in the FIG. 5, the lubrication oil supply aperture 25a opens between each of the ball screw grooves spirally formed in the ball screw nut 25, and the lubrication oil atomized by the spray nozzle 35 is directly sprayed onto the surface of the ball screw shaft 26. That is, a part requiring the lubrication oil is a part of the ball screw groove, and the lubrication oil is supplied to the part so that an efficient supply of the lubrication oil is achieved.

It should be noted that although one spray nozzle 35 is provided in the examples shown in FIG. 4 and FIG. 5, a plurality of spray nozzles may be provided so as to spray the lubrication oil at a plurality of positions.

Moreover, generally, seal materials are provided on both ends of the ball screw nut 25 so as to store the lubrication oil in the ball screw nut 25. However, seal materials are not provided in the present invention so as to configure so that the lubrication oil and the compressed air can be easily discharged from both ends of the ball screw nut 25. Accordingly, the compressed air injected from the spry nozzle 35 is rapidly discharged from the ball screw nut 25. Thereby, the spray of the lubrication oil can be performed efficiently in the ball screw nut 25, which causes the atomized lubrication oil being efficiently diffused to an entire interior of the ball screw nut 25.

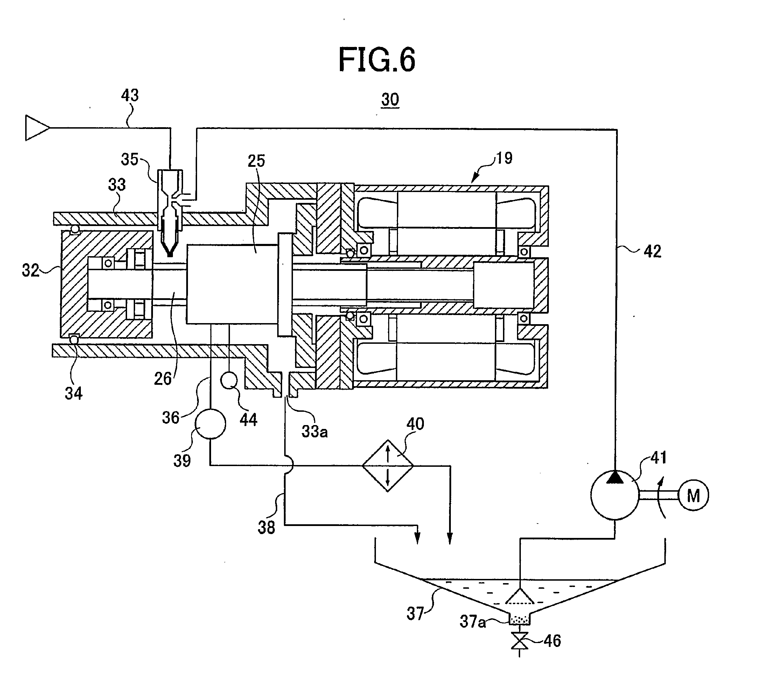

Next, a description will be given, with reference to FIG. 6, of a drive apparatus provided with a lubrication mechanism according to a second embodiment of the present invention. FIG. 6 is a structure diagram of the entire drive apparatus provided with the lubrication mechanism according to the second embodiment of the present invention. In FIG. 6, parts that are the same as the parts shown in FIG. 3 are given the same reference numerals, and descriptions thereof will be omitted. Although the lubrication mechanism shown in FIG. 2 has the same composition parts as the lubrication mechanism shown in FIG. 6, the positions of attaching the spray nozzle 35 differ. That is, in the lubrication mechanism shown in FIG. 6, the spray nozzle 35 does not spray the lubrication oil inside the ball screw nut 25 but sprays the atomized lubrication oil onto the surface of the ball screw shaft extending from the ball screw nut 25. Since the ball screw shaft 26 always reciprocates in the axial direction during operation of the ball screw mechanism 31, the lubrication oil adhering onto the surface of the ball screw shaft 26 is supplied to inside the ball screw nut 25 in association with the movement of the ball screw shaft 26.

It should be noted that although the lubrication oil is used as a lubrication material in the above-mentioned first and second embodiments, any lubrication materials may be used if they are in a liquid state and can be atomized by the spray nozzle 35.

Moreover, although the ball screw mechanism is explained as an example in the above-mentioned first and second embodiments, it can be applies to a rotational/linear movement conversion mechanism according to a roller screw mechanism or a planetary gear.

It should be noted that the example in which the present invention is applied to the clamping drive part and the injection drive part is mainly explained in the present embodiments. The present invention can be more effectively applied in a case it is applied to an injection apparatus in which a maximum load is generated over a whole injection stroke than in a case where it is used for a ball screw in which a section where a maximum load is generated is a part of a hole opening and closing stroke. Additionally, the same effect is obtainable when applying the present invention to an ejector apparatus, a plasticizer moving apparatus or the like.

The present invention is not limited to the specifically disclosed embodiments, and various variations and modifications may be made without departing from the scope of the present invention.

## Claims

1. A molding machine having a lubrication mechanism, comprising:
a conversion mechanism (25) that converts a rotational movement of a rotational shaft of a motor (19), which is a drive source, into a linear movement in an axial direction; and
a spray nozzle (35) that sprays an atomized lubrication material onto a component part of the conversion mechanism;
**characterized in that** it further comprises recovery means for recovering the lubrication material sprayed from said spray nozzle(35), wherein said spray nozzle(35) is a nozzle that atomizes the lubrication material of a liquid state by an injection of a gas,
and **in that** the recovery means comprises a cover member (33) surrounding the component part of the conversion mechanism, a recovery pipe (36, 38), which leads the liquid state lubrication material collected in the cover member (33) or the component part of said conversion mechanism, to a recovery container (37), and a pump (41) for supplying the lubrication material collected in the recovery container (37) to the spray nozzle (35).

2. A molding machine having the lubrication mechanism as claimed in claim 1, wherein the gas supplied to said spray nozzle (35) is a compressed air, and the component part of said conversion mechanism is cooled due to adiabatic expansion when the compressed air is injected from said spray nozzle (35).

3. A molding machine having the lubrication mechanism as claimed in claim 1, wherein said conversion mechanism is a ball screw mechanism (31) comprising a ball screw shaft (26) and a ball screw nut (25), and said spray nozzle (35) is communicated with an aperture opening (25a) in an inner surface of a groove in which balls (27) inside said ball screw nut (25) roll, the aperture opening (25a) at a position where no load is applied by the balls(27).

4. A molding machine having the lubrication mechanism as claimed in claim 1, wherein said conversion mechanism is a ball screw mechanism (31) comprising a ball screw shaft (26) and a ball screw nut (25), and said spray nozzle (35) is communicated with an aperture opening (25a) between grooves in which balls (27) inside said ball screw nut (25) roll.

5. A molding machine having the lubrication mechanism as claimed in claim 1, wherein said conversion mechanism is a ball screw mechanism (31) comprising a ball screw shaft (26) and a ball screw nut (25), and said spray nozzle (35) is located in the vicinity of said ball screw shaft (26) so as to directly spray the lubrication material onto said ball screw shaft (26).

6. A molding machine having the lubrication mechanism as claimed in claim 1, wherein said molding machine is an electric injection molding machine.

7. A lubrication method of a molding machine, comprising spraying an atomized lubrication material to a component part of a conversion mechanism that converts a rotational movement of a rotational shaft of a motor (19), which is a drive source (30) of a clamping apparatus, into a linear movement in an axial direction, spraying the lubrication material of a liquid state by atomizing the lubrication material by an injection of a gas;
**characterized by**:
recovering the lubrication material that has been sprayed and lubricated the conversion mechanism; and
reusing the recovered lubrication material.

8. The lubrication method of a molding machine as claimed in claim 7, wherein the gas is a compressed air, and the component part of said conversion mechanism is cooled due to adiabatic expansion when the compressed air is injected.

## Patentansprüche

1. Eine Formmaschine mit einem Schmiermechanismus, wobei Folgendes vorgesehen ist:
ein Umwandlungsmechanismus (25), der eine Drehbewegung einer Drehwelle eines Motors (19), der die Antriebsquelle bildet, in eine Linearbewegung in einer Axialrichtung umwandelt; und
eine Sprühdüse (35), die ein atomisiertes Schmiermaterial auf einen Komponententeil des Umwandlungsmechanismus sprüht;
**gekennzeichnet**, dass ferner Wiedergewinnungsmittel vorgesehen sind zur Wiedergewinnung des von der Sprühdüse (35) gesprühten Schmiermaterials, wobei in der Sprühdüse (35) eine Düse ist, die das Schmiermaterial aus einem Flüssigzustand durch eine Injektion eines Gases atomisiert,
und ferner **dadurch gekennzeichnet, dass** die Wiedergewinnungsmittel ein Abdeckglied (33) aufweisen, welches den Komponententeil des Umwandlungsmechanismus umgibt, ein Wiedergewinnungsrohr (36, 38), welches das im flüssigen Zustand befindliche Schmiermaterial, gesammelt in dem Abdeckglied (33) oder dem Komponententeil des Umwandlungsmechanismus zu einem Wiedergewinnungsbehälter (37) führt, und mit einer Pumpe (41) zum Liefern des in dem Wiedergewinnungsbehälter (37) gesammelten Schmiermaterials zur Sprühdüse (35).

2. Formmaschine mit dem Schmiermechanismus nach Anspruch 1, wobei das zur Sprühdüse (35) gelieferte Gas Druckluft ist und wobei der Komponententeil des Umwandlungsmechanismus infolge adiabatischer Expansion gekühlt wird, wenn komprimierte Luft oder Kompressionsluft von der erwähnten Sprühdüse (35) injiziert oder eingespritzt wird.

3. Formmaschine mit einem Schmiermechanismus nach Anspruch 1, wobei der Umwandlungsmechanismus ein Kugelschraubmechanismus (31) ist, der eine Kugelschraubenwelle (26) und eine Kugelschraubenmutter (25) aufweist, und wobei die Sprühdüse (35) mit einer Aperturöffnung (25a) in einer Innenoberfläche einer Nut in Verbindung steht in der Kugeln (27) innerhalb der Kugelschraubenmutter (25) rollen, wobei die Aperturöffnung (25a) sich auf einer Position befindet, wo keine Last durch die Kugeln (27) angelegt wird.

4. Eine Formmaschine mit einem Schmiermechanismus nach Anspruch 1, wobei der Umwandlungsmechanismus ein Kugelschraubmechanismus (31) ist, der eine Kugelschraubenwelle (26) und eine Kugelschraubenmutter (25) aufweist und wobei die Sprühdüse (35) mit einer Aperturöffnung (25a) in Verbindung steht und zwar zwischen den Nuten in denen die Kugeln (27) innerhalb der Kugelschraubenmutter (25) rollen.

5. Eine Formmaschine mit einem Schmiermechanismus nach Anspruch 1, wobei der Umwandlungsmechanismus ein Kugelschraubmechanismus (31) ist, der eine Kugelschraubenwelle (26) und eine Kugelschraubenmutter (25) aufweist, und wobei eine Sprühdüse (35) in der Nähe der Kugelschraubwelle (26) derart angeordnet ist, dass das Schmiermaterial auf die Kugelschraubenwelle (26) direkt aufgesprüht oder aufgespritzt wird.

6. Eine Formmaschine mit dem Schmiermechanismus nach Anspruch 1, wobei die Formmaschine eine elektrische Spritzformmaschine ist.

7. Ein Schmierverfahren einer Formmaschine, wobei Folgendes vorgesehen ist:
Sprühen eines atomisierten Schmiermaterials auf einen Komponententeil eines Umwandlungsmechanismus, der eine Drehbewegung einer Drehwelle des Motors (19), der eine Antriebswelle (30) einer Klemmvorrichtung bildet, in eine Linearbewegung in einer Axialrichtung umwandelt,
Sprühen des in einem flüssigen Zustand befindlichen Schmiermaterials durch Atomisierung des Schmiermaterials durch ein Einspritzen eines Gases, **gekennzeichnet durch**:
Wiedergewinnen des Schmiermaterials, das gesprüht wurde und den Umwandlungsmechanismus geschmiert hat; und
Wiederverwendung des wiedergewonnenen Schmiermaterials.

8. Das Schmierverfahren einer Formmaschine nach Anspruch 7, wobei das Gas komprimierte Luft ist, und wobei der Komponententeil des Umwandlungsmechanismus gekühlt wird und zwar infolge der adiabatischen Ausdehnung dann, wenn die komprimierte Luft injiziert oder eingesprüht wird.

## Revendications

1. Machine de moulage comportant un mécanisme de lubrification, comprenant :
un mécanisme de conversion (25) qui convertit un mouvement rotatif d'un arbre rotatif d'un moteur (19), qui est une source motrice, en un mouvement linéaire dans une direction axiale ; et
une buse de vaporisation (35) qui vaporise un lubrifiant pulvérisé sur un composant faisant partie du mécanisme de conversion ;
**caractérisé en ce qu'**elle comprend en outre des moyens de récupération destinés à récupérer le lubrifiant vaporisé par la buse de vaporisation (35), la buse de vaporisation (35) étant une buse qui pulvérise le lubrifiant à l'état liquide par l'injection d'un gaz,
et **en ce que** les moyens de récupération comprennent un élément de couvercle (33) entourant le composant faisant partie du mécanisme de conversion, un tuyau de récupération (36, 38), qui conduit le lubrifiant à l'état liquide recueilli dans l'élément de couvercle (33) du composant faisant partie du mécanisme de conversion vers un conteneur de récupération (37), et une pompe (41) pour fournir le lubrifiant recueilli dans le conteneur de récupération (37) à la buse de vaporisation (35).

2. Machine de moulage comportant le mécanisme de lubrification selon la revendication 1, dans laquelle le gaz fourni à la buse de vaporisation (35) est de l'air comprimé, et le composant faisant partie du mécanisme de conversion est refroidi en raison de l'expansion adiabatique lorsque l'air comprimé est injecté par la buse de vaporisation (35).

3. Machine de moulage comportant le mécanisme de lubrification selon la revendication 1, dans laquelle le mécanisme de conversion est un mécanisme à vis à billes (31) comprenant un arbre de vis à billes (26) et un écrou de vis à billes (25), et la buse de vaporisation (35) est en communication avec une ouverture (25a) dans une surface intérieure d'une gorge dans laquelle roulent des billes (27) à l'intérieur de l'écrou de vis à billes (25), l'ouverture (25a) débouchant au niveau d'une position où aucune charge n'est appliquée par les billes (27).

4. Machine de moulage comportant le mécanisme de lubrification selon la revendication 1, dans laquelle le mécanisme de conversion est un mécanisme à vis à billes (31) comprenant un arbre de vis à billes (26) et un écrou de vis à billes (25), et la buse de vaporisation (35) est en communication avec une ouverture (25a) débouchant entre des gorges dans lesquelles roulent des billes (27) dans l'écrou de vis à billes (25).

5. Machine de moulage comportant le mécanisme de lubrification selon la revendication 1, dans laquelle le mécanisme de conversion est un mécanisme à vis à billes (31) comprenant un arbre de vis à billes (26) et un écrou de vis à billes (25), et la buse de vaporisation (35) est située au voisinage de l'arbre de vis à billes (26) de façon à vaporiser directement le lubrifiant sur l'arbre de vis à billes (26).

6. Machine de moulage comportant le mécanisme de lubrification selon la revendication 1, dans laquelle la machine de moulage est une machine électrique de moulage par injection.

7. Procédé de lubrification d'une machine de moulage, comprenant la vaporisation d'un lubrifiant pulvérisé vers un composant faisant partie d'un mécanisme de conversion qui convertit un mouvement rotatif d'un arbre rotatif d'un moteur (19), qui est une source motrice (30) d'un dispositif de bridage, en un mouvement linéaire dans une direction axiale, en vaporisant le lubrifiant à l'état liquide en pulvérisant le lubrifiant par l'injection d'un gaz ;
**caractérisé par** les étapes suivantes :
récupérer le lubrifiant qui a été vaporisé et qui a lubrifié le mécanisme de conversion ; et
réutiliser le lubrifiant récupéré.

8. Procédé de lubrification d'une machine de moulage selon la revendication 7, dans lequel le gaz est de l'air comprimé, et le composant faisant partie du mécanisme de conversion est refroidi en raison de l'expansion adiabatique lorsque l'air comprimé est injecté.
